# EUROPÄISCHE PATENTSCHRIFT

(11) **EP 1 066 454 B1**
(45) Veröffentlichungstag und Bekanntmachung des Hinweises auf die Patenterteilung: **18.06.2003**
(21) Anmeldenummer: 99947255.8
(22) Anmeldetag: 23.07.1999
(51) Int. Cl.: F01N 3/20, B01D 53/94, F02B 37/18

(54) **VORRICHTUNG ZUM NACHBEHANDELN VON ABGASEN EINER BRENNKRAFTMASCHINE**
SECONDARY TREATMENT DEVICE FOR THE EXHAUST GASES OF AN INTERNAL COMBUSTION ENGINE
DISPOSITIF SERVANT A TRAITER LES GAZ D'ECHAPPEMENT D'UN MOTEUR A COMBUSTION INTERNE

(30) Priorität: 01.12.1998 DE 19855384
(43) Veröffentlichungstag der Anmeldung: 10.01.2001
(73) Patentinhaber: ROBERT BOSCH GMBH, 70442 Stuttgart (DE)
(72) Erfinder: MAHR, Bernd, D-73207 Plochingen (DE)
(86) Internationale Anmeldenummer: DE9902265
(87) Internationale Veröffentlichungsnummer: WO00032913

(56) Entgegenhaltungen:
- EP-A- 0 381 236
- EP-A- 0 886 044
- FR-A- 2 483 515
- US-A- 5 067 320
- PATENT ABSTRACTS OF JAPAN vol. 017, no. 475 (C-1103), 30. August 1993 (1993-08-30) & JP 05 115749 A (MAZDA MOTOR CORP), 14. Mai 1993 (1993-05-14)
- PATENT ABSTRACTS OF JAPAN vol. 016, no. 328 (M-1281), 16. Juli 1992 (1992-07-16) & JP 04 094410 A (TOYOTA MOTOR CORP), 26. März 1992 (1992-03-26)

## Beschreibung

Die vorliegende Erfindung betrifft eine Vorrichtung zum Nachbehandeln von Abgasen einer Brennkraftmaschine, mit einem der Reduktion von NOX-Bestandteilen der Abgase dienenden Reduktionskatalysator und einer Einrichtung, die im Abgas eine Druckdifferenz erzeugt, insbesondere, jedoch nicht ausschließlich für selbstzündende Brennkraftmaschinen oder Dieselmotoren mit Abgas-Turbolader.

Bedingt durch ständig sinkende Schadstoffgrenzwerte wurden in den letzten Jahren verschiedenste Vorrichtungen zur Nachbehandlung von Abgasen von Brennkraftmaschinen entwickelt. Um eine Reduktion von NOX-Bestandteilen in Abgasen zu erzielen, wurden insbesondere für Dieselmotoren Reduktionskatalysatoren entwickelt, die üblicherweise in SCR-Katalysatoren mit Harnstoff-Dosiersystem und Speicherkatalysatoren unterteilt werden. Die sog. SCR-Katalysatoren werden mittels einer Harnstoff- und/oder Ammoniak-Reduktionsmittelzufuhr regeneriert, während die sog. Speicherkatalysatoren mit Kohlenwasserstoffen des mitgeführten Brennkraftmaschinen-Brennstoffes in sog. Abgas-Fettphasen regeneriert weiden.

Diese Abgas-Fettphasen lassen sich zwar innermotorisch im unteren Drehzahl- und Lastbereich darstellen, jedoch ist bei höheren Drehzahlen und Drehmomenten eine Zudosierung von Reduktionsmitteln direkt in den Abgastrakt nötig, wobei ggf. eine Vorerwärmung des Reduktionsmittels erforderlich sein kann.

Aus der JP-A-05115749 ist ein zweiteiliger Entstickungskatalysator bekannt, bei dem HC über eine Bypassleitung zugeführt wird.

Aus der DE-A-196 25 447 ist eine Einrichtung zum Nachbehandeln von Abgasen einer Brennkraftmaschine bekannt, bei welcher Abgase vor Erreichen eines Reduktionskatalysators mit dem Brennstoff angereichert werden. Diese Anreicherung erfolgt über eine Verdampfungseinrichtung, welche das flüssige Reduktionsmittel somit vorerwärmt und aufbereitet in den Abgasstrom einleitet.

Aus der EP-A-0 381 236 ist ein entsprechendes System bekannt, welches zum Entfernen von Stickoxiden in Abgasen aus einem Dieselmotor Ammoniak als Reduktionsmittel zudosiert. Bei dem zuletzt genannten System ist des weiteren ein Turbolader vorgesehen, welcher den Druck des Abgases senkt. Die Harnstoff-Wasser-Lösung wird mittels Druckluft zudosiert.

Aus der US-PS 5,067,320 ist schließlich ein System bekannt, welches dazu dient, Abgaspartikel in einem hierfür konzipierten Brennraum zu verbrennen. Der Brennraum wird über zwei Abgasleitungen versorgt, von denen eine mit einer Brennstoffzufuhr ausgestattet ist, um in dem Brennraum ein brennbares Gemisch bereitzustellen, mittels welchem die Abgaspartikel des verbleibenden Abgasstromes verbrannt werden können. Dieses Verbrennen von Abgaspartikeln steht jedoch der Zielsetzung eines Katalysators diametral entgegen, da zusätzliche Stickoxide bei dieser schwer kontrollierbaren Verbrennung von Russpartikeln entstehen.

Aufgabe der Erfindung ist es, eine gattungsgemäße Vorrichtung, wie z. B. aus der EP-A-0 381 236 bekannt, zum Nachbehandeln von Abgasen einer Brennkraftmaschine mit einem der Reduktion von NOₓ-Bestandteilen der Abgase dienenden Reduktionskatalysator, zu dem ein Abgasrohr führt, eine Reduktionsmittel-Zufuhreinrichtung und eine Einrichtung, die im Abgas eine Druckdifferenz erzeugt, in solch einer Weise weiterzubilden, dass eine einfache und optimierte Reduktionsmittelzufuhr erfolgt, so dass eine bessere Reduzierung von NOₓ-Bestandteilen aus Abgasen resultiert.

Erfindungsgemäß wird diese Aufgabe durch eine Vorrichtung mit den Merkmalen des Anspruches 1 gelöst. Bevorzugte Ausführungsformen sind in den abhängigen Ansprüchen definiert.

Insbesondere wird bei der erfindungsgemäßen Lösung eine Bypassleitung vorgesehen, die die Einrichtung umgeht, welche in den Abgasen eine Druckdifferenz erzeugt. In diese Bypassleitung bringt die Reduktionsmittel-Zufuhreinrichtung das Reduktionsmittel ein. Es wird erfindungsgemäß ein in dem System vorliegender Staudruck vor der Turbine eines Abgas-Turboladers dazu ausgenutzt, das Reduktionsmittel aufzubereiten und zu transportieren. In der Bypassleitung kann bereits eine gewisse Verdampfung und/oder Vermengung des Reduktionsmittels mit einem Teil der Abgase erfolgen, so dass am Katalysatoreingang ein homogeneres Abgas-Reduktionsmittel-Gemisch vorliegt. Wenn eine Harnstoff-Wasser-Lösung als Reduktionsmittel zum Einsatz kommt, sind durch die Ausnutzung des Staudruckes keine zusätzlichen Druckluftaggregate erforderlich, so dass eine Implementierung auch im Pkw-Bereich möglich erscheint. Bei der Verwendung der im Fahrzeug mitgeführten Kohlenwasserstoffe als Reduktionsmittel entfällt eine sonst erforderliche Aufbereitung mittels Glühstiftkerzen oder anderen Verdampfungseinrichtungen durch Verwendung eines Crack-Katalysators bzw. eines sehr kleinen unterdimensionierten Katalysators. Die erfindungsgemäße Lösung ermöglicht somit eine NOₓ-Reduktion auch bei hohen Abgasvolumenströmen durch eine fette Gemischwolke aus HC und CO, wobei das System über eine kompakte Bauweise verfügt, ohne elektrische Energie oder zusätzliche Aggregate zu erfordern, bei nur geringem Kraftstoffmehrverbrauch. Darüber hinaus ist es vorteilhaft, wenn die druckdifferenzerzeugende Einrichtung die geleistete Arbeit in der Form einer Turbine eines Abgas-Turboladers anderweitig zur Verfügung stellt. Somit entsteht ein synergisierender Effekt, nämlich dass bei einem System mit Turbolader der Staudruck für die Abgasnachbehandlung verwendet wird, während der Druck des Abgases selbst zum Betreiben eines Turboladers verwendet wird.

Vorteilhafterweise umfasst die Bypassleitung ein Ventil, welches insbesondere bevorzugt steuerbar ist. Indem die Bypassleitung über ein Ventil verfügt, kann der an der den.Druck verändernden Einrichtung vorbeigeführte Abgasvolumenstrom eingestellt oder gesteuert werden, so dass sich, abhängig von Brennkraftmaschinen-Parametern, ein optimaler Betrieb des Abgassystems realisieren lässt. Des weiteren können über das Ventil verschiedene Motortypen und Betriebsmodi der Motoren berücksichtigt werden.

Um den reduktionsmittelhaltigen Teil des Abgases, der in der Bypaßleitung vorliegt, mit dem Rest des Abgases zu vereinen, ist es bevorzugt, daß die Bypaßleitung über einen Ringkanal mit Bohrungen in dem Abgasrohr mündet. Diese Ausgestaltung stellt eine gleichförmige und homogene Vermengung bereit, so daß am Katalysatoreingang ein insgesamt homogenes Reduktionsmittel-Abgas-Gemisch vorliegt.

Alternativ kann die Bypaßleitung auch über ein sogenanntes Sprührohr in dem Abgasrohr münden. Bei dieser Ausgestaltung wird der über die Bypaßleitung umgeleitete Teil des Abgases, welcher mit dem Reduktionsmittel angereichert ist, im Bereich höchster Strömungsgewschwindigkeit in dem Rest des Abgases ausgegeben, so daß ebenfalls eine gute Vermengung von Reduktionsmittel und Abgas stattfindet.

Bei einer bevorzugten Ausführungsform umfaßt die Bypaßleitung ein Einspritzventil für die Reduktionsmittelzufuhr, so daß das Reduktionsmittel größtenteils bereits zerstäubt oder verdampft in dem umgeleiteten Abgasteil vorliegt. Bei dieser Ausgestaltung ist es möglich, daß sich ein Teil des Reduktionsmittels an der Wandung der Bypaßleitung niederschlägt, wobei dieser Teil jedoch durch die Abgaswärme teilweise verdampft wird und spätestens bei der Vermengung mit dem Restabgas vor Eintritt in den Katalysator im wesentlichen vollständig verdampft wird.

Alternativ zu einem Einspritzventil kann die Bypaßleitung eine Vergasereinrichtung für die Reduktionsmittelzufuhr aufweisen. Die Funktion einer Vergasereinrichtung ist im wesentlichen zu dem Einspritzventil entsprechend, wobei jedoch eine einer Saugstrahlpumpe entsprechende Ausgestaltung besonders vorteilhaft sein kann, um eine Fördereinrichtung für das Reduktionsmittel überflüssig zu gestalten. Anders ausgedrückt wird die Reduktionsmitteldosierung über die im Bypass herrschende Strömung bestimmt, d. h. insbesondere über das Ventil, welches den Durchsatz der Bypassleitung steuert.

Bei einer bevorzugten Ausführungsform ist der Bypassleitung ein weiterer Katalysator zugeordnet, welcher insbesondere als Crack-Katalysator ausgeführt sein kann. Dieser zusätzliche Oxidationskatalysator sollte relativ klein sein und nur geringe Mengen an Reduktionsmittel, insbesondere Kohlenwasserstoff, umsetzen. Somit kann eine noch verbesserte Reinigungswirkung des Abgassystems erzielt werden.

Zusammenfassend lässt sich feststellen, dass mit dem erfindungsgemäßen System eine Nachbehandlung von Abgasen einfach und effizient ermöglicht wird. Es kann eine NOₓ-Reduktion auch bei hohen Abgasvolumenströmen erfolgen, ohne daß zusätzliche Energie und/oder Aggregate wie Pumpen, Heizeinrichtungen, Verdampfungseinrichtungen etc. erforderlich wären.

Weitere Vorteile und Merkmale der Erfindung ergeben sich aus der folgenden detaillierten Beschreibung einiger derzeit bevorzugter Ausführungsformen unter Bezugnahme auf die beigefügten Zeichnungen, in welchen gilt:
- Figur 1: zeigt schematisch eine Brennkraftmaschine mit zugeordnetem Abgastrakt, eine bevorzugte Ausführungsform der erfindungsgemäßen Vorrichtung enthaltend.
- Figur 2: zeigt eine zu Figur 1 analoge Darstellung, jedoch eine andere bevorzugte Ausführung der erfindungsgemäßen Vorrichtung enthaltend.

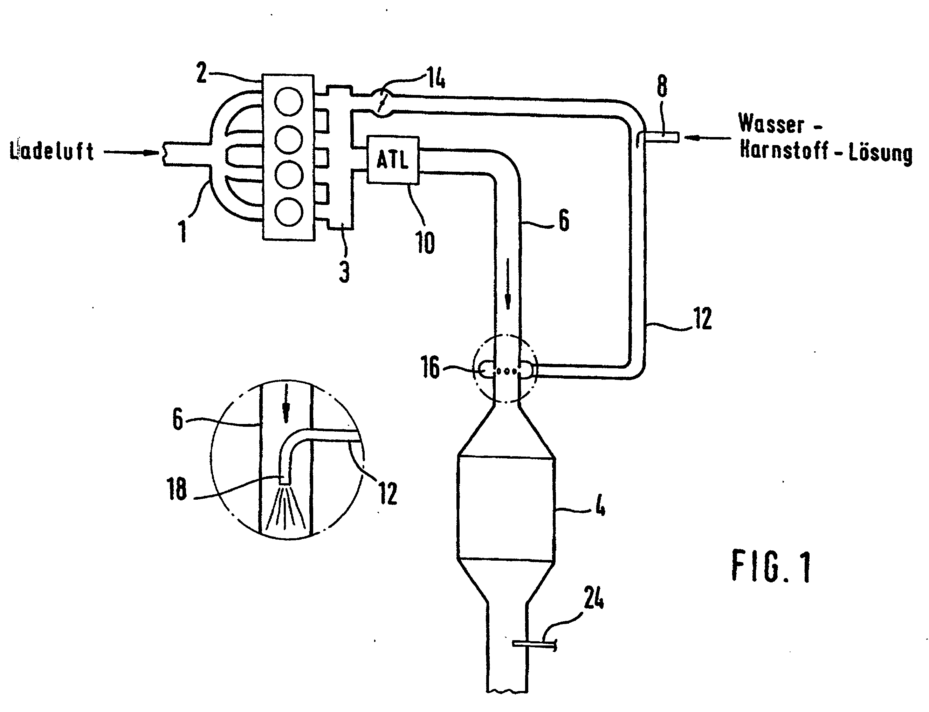

Das in Figur 1 gezeigte System ist insbesondere ausgelegt, um eine Wasser-Harnstoff-Lösung als Reduktionsmittel zu verwenden. In der Darstellung gibt ein Motor 2 Abgase in einen Abgaskrümmer 3 aus. In dem Abgaskrümmer 3 ist ein Abgas-Turbolader 10 nachgeschaltet, von dem ein Abgasrohr 6 zu einem Reduktionskatalysator 4 führt. Ein kleiner Teil der in dem Abgaskrümmer vorliegenden Abgase wird über ein Ventil oder einen anderen Verschlußmechanismus 14 einer Bypaßleitung 12 zugeführt. Somit liegt in der Bypaßleitung 12 im wesentlichen der Staudruck vor der Turbine des Abgas-Turboladers 10 vor. In diese Bypaßleitung wird über eine Reduktionsmittel-Zufuhreinrichtung 8 eine Wasser-Harnstoff-Lösung zugeführt. In der dargestellten Ausführungsform ist die Reduktionsmittel-Zufuhreinrichtung 8 in der Form eines Einspritzventiles vorgesehen, so daß die Wasser-Harnstoff-Lösung zumindest teilweise zerstäubt wird. Die Bypaßleitung 12 mündet über einen Ringkanal 16 mit Bohrungen in dem Abgasrohr 6, und zwar praktisch unmittelbar vor dem Reduktionskatalysator 4.

Alternativ zu dem Ringkanal mit Bohrungen kann der Übergang zwischen Bypaßleitung 12 und Abgasrohr 6 auch über ein sogenanntes Sprührohr erfolgen, wie in der Detailansicht gezeigt. Bei dieser Ausgestaltung ist das Ende der Bypaßleitung 12 im wesentlichen im Bereich höchster Strömungsgeschwindigkeit in dem Abgasrohr, im wesentlichen parallel diesbezüglich verlaufend, angeordnet. Somit wird aus dem Sprührohr 18 ein Gemisch aus Abgas und Wasser-Harnstoff-Lösung unter Druck ausgegeben, so daß eine intensive Vermengung und Aerosolbildung stattfindet. Als ein Ergebnis liegt beim Eingang des Reduktionskatalysators 4 ein praktisch "homogenes Gemisch" aus Abgas und Reduktionsmittel vor. Zur Funktionskontrolle kann schließlich hinter dem Katalysator 4 noch ein NOX-Sensor 24 vorgesehen werden. Die Steuerung des gesamten Systemes kann sowohl über die Motorsteuerung selbst erfolgen, als auch über eine separate Steuerung, die das Ventil 14 und die Reduktionsmittel-Zufuhreinrichtung 8 steuert. Bei der Steuerung können sowohl Motor-Betriebsparameter als auch Ausgabedaten des NOX-Sensors 24 verwendet werden.

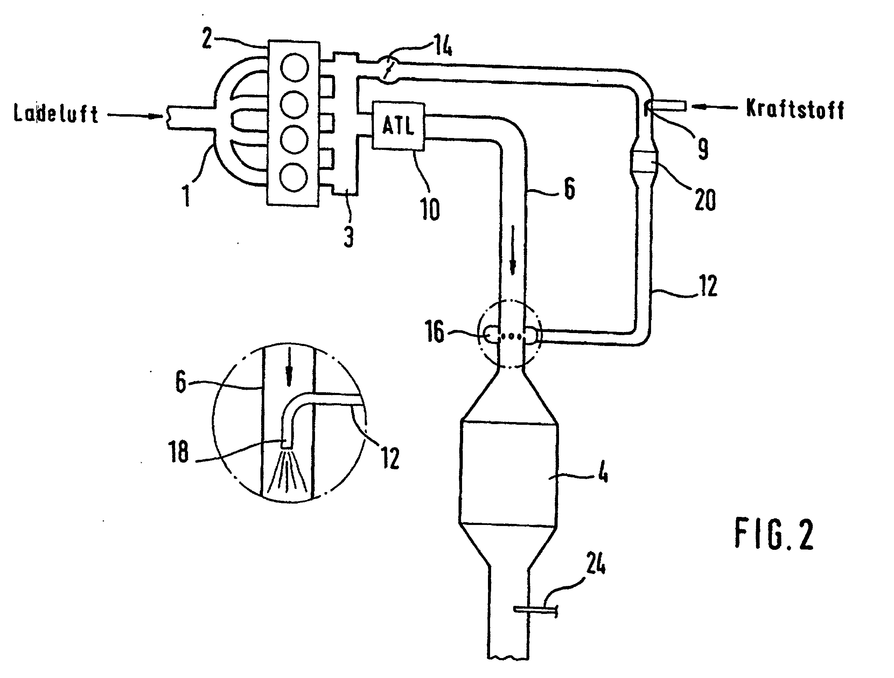

In Figur 2 ist ein System im wesentlichen analog zu Figur 1 dargestellt, jedoch insbesondere vorgesehen zur Verwendung von Kohlenwasserstoffen bzw. Kraftstoff als Reduktionsmittel. Wie in der in Figur 1 gezeigten Ausführungsform wird ein Teil der Abgase unter Abgas-Turbolader-Staudruck über eine Bypaßleitung 12 an der Turbine des Abgas-Turboladers 10 vorbeigeführt. Wie bei der Ausführungsform von Figur 1 wird das Reduktionsmittel, hier Kraftstoff, insbesondere Diesel, in die Bypaßleitung eingeführt. Im Gegensatz zu der in Figur 1 gezeigten Ausführungsform ist jedoch eine Vergasereinrichtung 9 vorgesehen, die das Reduktionsmittel in den Abgasteilstrom in der Bypaßleitung 12 einbringt. Flußabwärts der Reduktionsmittelzufuhr 9 liegend ist bei der in Figur 2 gezeigten Ausführungsform zusätzlich ein Katalysator 20 kleiner Größe vorgesehen. Der Katalysator 20 ist in der gezeigten Ausführungsform ein sogenannter Crack-Katalysator, der als Oxidationskatalysator dient. Dieser setzt geringe Mengen an Kohlenwasserstoff um, wobei jedoch der überwiegende Teil der Kohlenwasserstoffe in diesem oder nach diesem Katalysator verdampft oder zu Kohlenmonoxid umgewandelt wird, um danach vor dem eigentlichen Katalysator dem Abgasstrom zur Reduktion von NOX zugeführt zu werden. Vorzugsweise kann das Reduktionsmittel in Form von fetten Gemischwolken zur Reduktion im Katalysator eingesetzt werden. Wie in der vorangehend beschriebenen Ausführungsform erfolgt der Übergang zwischen Bypaßleitung 12 und Abgasrohr 6 über einen Ringkanal 16 mit Bohrungen oder alternativ über ein Sprührohr 18.

Obwohl die vorliegende Erfindung vorangehend unter Bezugnahme auf bevorzugte Ausführungsformen vollständig beschrieben wurde, sollte der Fachmann erkennen, daß verschiedenste Modifikationen möglich sind, die insoweit von den Ansprüchen erfaßt als Äquivalente zu erachten sind. Beispielhaft kann die Einrichtung, die eine Druckdifferenz im Abgas erzeugt, auch eine einfache Drossel sein, die die Druckdifferenz nicht zum Antreiben eines Turboladers verwendet.

Durch eine kurzzeitige Zudosierung von Reduktionsmittel kann eine sehr fette Gemischwolke zur Reduktion des Katalysators eingesetzt werden, wodurch eine Reduktion im Vollstrom ohne Abgasklappen (z.B. beim Speicherkatalysator) erzielt wird.

Vorteilhafterweise kann als Reduktionsmittel Kohlenmonoxid direkt aus einer Druckgasflasche ohne Bypaßleitung verwendet werden.

## Patentansprüche

1. Vorrichtung zum Nachbehandeln von Abgasen einer Brennkraftmaschine, mit einem der Reduktion von NOₓ-Bestandteilen der Abgase dienenden Reduktionskatalysator und einer im Abgas eine Druckdifferenz erzeugenden Einrichtung, wobei ein Abgasrohr von der Einrichtung zum Reduktionskatalysator führt, und mit einer Reduktionsmittel-Zuführeinrichtung, **dadurch gekennzeichnet, dass** eine die Einrichtung (10) umgehende Bypass-Leitung (12) vorgesehen ist und die Reduktionsmittel-Zufuhreinrichtung (8) das Reduktionsmittel in die Bypass-Leitung (12) einbringt, so dass zum einen ein kleiner Teil des Abgases unter Umgehung der Einrichtung (10) zum Reduktionskatalysator (4) gelangen kann und zum anderen Abgase die eine Druckdifferenz erzeugende Einrichtung (10) durchströmen und anschließend zum Reduktionskatalysator (4) gelangen, so dass in der Bypassleitung im Wesentlichen der Staudruck vor der Einrichtung anliegen und dazu genutzt werden kann, das Reduktionsmittel aufzubereiten und zu transportieren, wobei die druckdifferenzerzeugende Einrichtung (10) eine Turbine eines Abgas-Turboladers ist.

2. Vorrichtung nach Anspruch 1, **dadurch gekennzeichnet, daß** die Bypaßleitung (12) ein Ventil (14) enthält, welches insbesondere steuerbar ist.

3. Vorrichtung nach Anspruch 1 oder 2, **dadurch gekennzeichnet, daß** die Bypaßleitung (12) über einen Ringkanal (16) mit Bohrungen in dem Abgasrohr (6) mündet.

4. Vorrichtung nach Anspruch 1 oder 2, **dadurch gekennzeichnet, daß** die Bypaßleitung (12) über ein Sprührohr (18) in dem Abgasrohr (6) mündet.

5. Vorrichtung nach einem der vorangegangenen Ansprüche, **dadurch gekennzeichnet, daß** die Bypaßleitung (12) ein Einspritzventil (8) für die Reduktionsmittelzufuhr aufweist.

6. Vorrichtung nach einem der Ansprüche 1 bis 4, **dadurch gekennzeichnet, daß** die Bypaßleitung (12) eine Vergasereinrichtung (8) für die Reduktionsmittel zufuhr aufweist.

7. Vorrichtung nach einem der vorangegangenen Ansprüche,
**dadurch gekennzeichnet, daß** die Bypaßleitung (12) zumindest einen Katalysator (20), insbesondere einen Crack-Katalysator (20), umfaßt.

8. Vorrichtung nach einem der vorangegangenen Ansprüche, **dadurch gekennzeichnet, daß** das Reduktionsmittel ein Harnstoff, Ammoniak oder eine Harnstoff-Wasser-Lösung ist.

9. Vorrichtung nach einem der Ansprüche 1 bis 7, **dadurch gekennzeichnet, daß** das Reduktionsmittel der Brennstoff der Brennkraftmaschine (2), insbesondere Diesel, ist.

## Claims

1. Device for the aftertreatment of exhaust gases from an internal combustion engine, having a reduction catalytic converter, which is used to reduce NOₓ constituents in the exhaust gases, and a means for generating a pressure difference in the exhaust gas, an exhaust pipe leading from the means to the reduction catalytic converter, and having a means for supplying reducing agent, **characterized in that** there is a bypass line (12), which bypasses the means (10), and the means (8) for supplying reducing agent introduces the reducing agent into the bypass line (12), so that on the one hand a small proportion of the exhaust gas can pass to the reduction catalytic converter (4) bypassing the means (10), and on the other hand exhaust gases flow through the means (10) for generating a pressure difference and then pass to the reduction catalytic converter (4), so that substantially the dynamic pressure upstream of the means can be present in the bypass line and can be used to prepare and transport the reducing agent, the means (10) for generating a pressure difference being a turbine of an exhaust-gas turbocharger.

2. Device according to Claim 1, **characterized in that** the bypass line (12) includes a valve (14), which in particular is controllable.

3. Device according to Claim 1 or 2, **characterized in that** the bypass line (12) opens out in the exhaust pipe (6) via an annular passage (16) with bores.

4. Device according to Claim 1 or 2, **characterized in that** the bypass line (12) opens out in the exhaust pipe (6) via a spray pipe (18).

5. Device according to one of the preceding claims, **characterized in that** the bypass line (12) has an injection valve (8) for supplying reducing agent.

6. Device according to one of Claims 1 to 4, **characterized in that** the bypass line (12) has a gasifier device (8) for the supply of reducing agent.

7. Device according to one of the preceding claims, **characterized in that** the bypass line (12) at least comprises a catalytic converter (20), in particular a cracking catalytic converter (20).

8. Device according to one of the preceding claims, **characterized in that** the reducing agent is a urea, ammonia or a urea-water solution.

9. Device according to one of Claims 1 to 7, **characterized in that** the reducing agent is the fuel for the internal combustion engine (2), in particular diesel.

## Revendications

1. Dispositif de traitement des gaz d'échappement d'un moteur à combustion interne comprenant un catalyseur de réduction servant à réduire les composants NOₓ des gaz d'échappement et une installation créant une différence de pression dans les gaz d'échappement, un conduit de gaz d'échappement allant de l'installation au catalyseur réducteur ainsi qu'une installation d'alimentation en agent réducteur,
**caractérisé en ce qu'**
une conduite de dérivation (12) contourne l'installation (10) et l'installation d'alimentation de l'agent réducteur (8) introduit l'agent réducteur dans la conduite de dérivation (12) de façon que d'une part une petite partie des gaz d'échappement contourne l'installation (10) pour arriver au catalyseur réducteur (4) et que les autres gaz d'échappement qui traversent l'installation (10) créent une différence de pression et arrivent ensuite sur le catalyseur réducteur (4), de façon à appliquer à la conduite de dérivation essentiellement la pression dynamique en amont de l'installation et ainsi l'utiliser pour préparer l'agent réducteur et le transporter, l'installation (10) créant la différence de pression étant la turbine d'un turbo-compresseur de gaz d'échappement.

2. Dispositif selon la revendication 1,
**caractérisé en ce que**
la conduite de dérivation (12) comporte une soupape (14) notamment commandée.

3. Dispositif selon la revendication 1 ou 2,
**caractérisé en ce que**
la conduite de dérivation (12) débouche dans la conduite des gaz d'échappement (6) par l'intermédiaire d'un canal annulaire (16) muni de perçage.

4. Dispositif selon la revendication 2,
**caractérisé en ce que**
la conduite de dérivation (12) débouche dans la conduite de gaz d'échappement (6) par un tube de pulvérisation (18).

5. Dispositif selon l'une quelconque des revendications précédentes,
**caractérisé en ce que**
la conduite de dérivation (12) comporte un injecteur (8) pour l'alimentation en agent réducteur.

6. Dispositif selon les revendications 1 à 4,
**caractérisé en ce que**
la conduite de dérivation (12) comporte une installation de gazage (8) pour l'alimentation en agent réducteur.

7. Dispositif selon l'une quelconque des revendications précédentes,
**caractérisé en ce que**
la conduite de dérivation (12) comporte au moins un catalyseur (20) notamment un catalyseur de cracking (20).

8. Dispositif selon l'une quelconque des revendications précédentes,
**caractérisé en ce que**
l'agent réducteur est de l'urée, de l'ammoniac ou une solution eau-urée.

9. Dispositif selon l'une quelconque des revendications 1 à 7,
**caractérisé en ce que**
l'agent réducteur est le combustible du moteur à combustion interne (2) notamment du moteur diesel.
